# EUROPEAN PATENT SPECIFICATION

(11) **EP 2 616 775 B1**
(45) Date of publication and mention of the grant of the patent: **06.01.2016**
(21) Application number: 10751697.3
(22) Date of filing: 13.09.2010
(51) Int. Cl.: G01C 21/36

(54) **NAVIGATION DEVICE WITH ALTERNATIVE NAVIGATION INSTRUCTIONS**
NAVIGATIONSVORRICHTUNG MIT ALTERNATIVEN NAVIGATIONSANWEISUNGEN
DISPOSITIF DE NAVIGATION COMPRENANT DES VARIANTES D'INSTRUCTION DE NAVIGATION

(43) Date of publication of application: 24.07.2013
(73) Proprietor: TomTom International B.V., 1011 AC Amsterdam (NL)
(72) Inventor: TRUM, Jeroen, NL-5632 PT Eindhoven (NL); BOSCHKER, Breght, NL-1223 AT Hilversum (NL); VAN SEGGELEN, Rob, NL-6021 DX Budel (NL)
(74) Representative: Dobson, Adrian
(86) International application number: PCT/EP2010/063396
(87) International publication number: WO 2012/034581

(56) References cited:
- EP-A2- 2 075 546
- US-A1- 2005 021 227
- US-A1- 2010 138 146

## Description

### BACKGROUND OF THE INVENTION

### 1. Field of the Invention

The field of the invention is navigation devices, methods and computer program products providing navigation instructions and alternative navigation instructions. 2. Technical Background

GPS based devices are well known and are widely employed as in-car navigation systems. Reference may be made to the TomTom^{R} navigation devices of the applicant. A user may input a destination address. The software then calculates the best route to the destination and displays instructions on how to navigate that route. By using the positional information derived from the GPS receiver, the software can determine at regular intervals the position of the navigation device (typically mounted on the dashboard or windscreen of a vehicle) and can display the current position of the vehicle on a map and display (and speak) appropriate navigation instructions (e.g. 'turn left in 100 m'). Graphics depicting the actions to be accomplished (e.g. a left arrow indicating a left turn ahead) can be displayed in a status bar and also be superimposed over the applicable junctions/turnings etc in the roads shown in the map itself. The term 'navigation device' refers to a device that enables a user to navigate to a pre-defined destination. The device may have an internal system for receiving location data, such as a GPS receiver, or may merely be connectable to a receiver that can receive location data.

### 3. Discussion of Related Art

It is known to enable in-car navigation systems to allow the driver, whilst driving in a car along a route calculated by the navigation system, to initiate a route re-calculation. This is useful where the vehicle is faced with construction work or heavy congestion.

Reference may be made to US6118389 which discloses techniques for calculating a re-route. Initiating the re-route calculation requires activation of a specific detour switch, which may however be inconvenient to the user. Reference may also be made to US5544060, which enables a device to preview the calculated route by displaying in successive screens each different road and turning that the vehicle has to take; the user however has to manually sequence through each successive screen using a preview switch until he reaches the road that he wants to exclude from the route; he then selects a cancel switch; a new route is calculated which excludes the cancelled road.

In WO2004/076976A1 there is disclosed a navigation device that has a route re-calculation function. This is activated by the user touching the screen to task away from the normal navigation map mode to a menu screen which displays multiple types of route re-calculation options. Related disclosures may be found in WO2004076977(A1), WO2004076978 (A1), and WO2004076979 (A1).

In US2010/138146A1 there is disclosed a navigation system that informs a user about alterative paths by providing manoeuvre recommendations at decision points.

In EP2075546A2 there is disclosed that provides guidance for a route along roads having on-street parking zones, and displaying to the user information pertains to the on-street parking zones that the vehicle will pass before arrival at the destination.

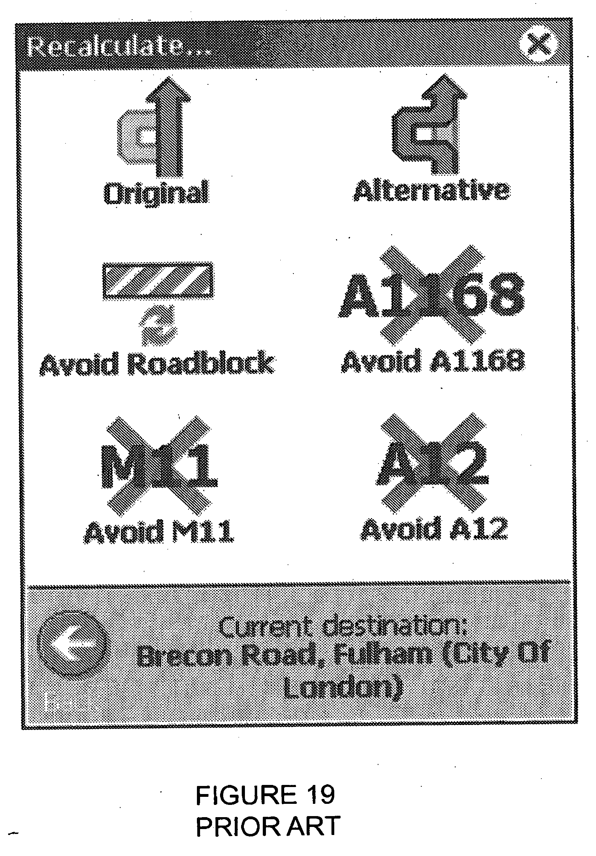

Prior art Figure 19 is a screen shot from a navigation device showing various route planning functions that enable a user to require the device to plot a new route to the destination that (i) is an alternative route; (it) avoids a roadblock immediately ahead; (Hi) avoids predefined roads or (iv) is a reversion to the original route. Figure 19 is reproduced from WO2004/076976A1.

### SUMMARY OF THE INVENTION

According to a first aspect of the present invention, there is provided a navigation device as claimed in claim 1.

The navigation device may be operable to provide the navigation instruction and the alternative navigation instruction without user intervention.

The navigation device may provide the alternative route without a user being required to request a calculation of the alternative route.

The navigation device may comprise a screen. The device may display on the screen the navigation instruction and the alternative navigation instruction simultaneously.

The navigation device may be operable to calculate routes to more than one destination

The navigation device may provide an alternative route by showing an alternative advice icon.

The navigation device may provide an alternative route advice that deviates from the route that the driver normally drives.

The navigation device may provide an alternative route advice and show an original advice as well, augmented with a difference in distance and travel time.

The navigation device may provide an alternative advice for a route to or via a nearest parking or rest area.

The navigation device may provide an alternative advice for a route to or via a nearby fuel station.

The navigation device may provide a screen displaying a next navigation instruction to a selected destination, and a next navigation instruction to a convenient parking area.

The navigation device may provide a preferred route; some points on the preferred route are important junctions at which an alternative route can start, and at these junctions, the device shows an alternative advice, showing a difference in length and time, and a distinguishing property of the alternative route.

The navigation device may be such that a verbosity of alternative advices is configurable.

The navigation device may be such that alternative advices are configurable to be augmented with a difference in length and time.

The navigation device may be such that an alternative advice or an importance of an alternative advice is distinguished based on different guidance icons or different colours being used.

The navigation device may be such that if a driver follows an alternative advice which is part of an alternative route, rather than continuing with the main route, the device considers the alternative route associated with that alternative advice to be the new main route.

The navigation device may be such that without a user touching a device screen, the user informs the device that he wants to follow an alternative route, simply by driving that way.

The navigation device may be such that separate advice icons are shown on a screen.

The navigation device may be such that alternative advice is identified because it has a different colour, or a different background colour, or a different style, or a different location on a screen.

The navigation device may be such that alternative advices are also spoken.

The navigation device may automatically compute alternative routes.

The navigation device may receive traffic information.

The navigation device may be such that an alternative route is computed by considering what would be a best route if there were no traffic, but then an actual travel time required for that best route in view of traffic is computed.

The navigation device may be such that information about an alternative route is displayed as a modified road sign.

The navigation device may not be able to receive traffic information.

The navigation device may be programmed with a map database and software that enables a route to be planned to a destination.

The navigation device may be an in-vehicle navigation system.

The navigation device may be a portable device, or an in-built vehicle device, or a device designed for non-vehicle use, or a device designed for vehicles other than cars.

According to a second aspect of the invention, there is provided a method of providing navigation instructions for a navigation device as claimed in claim 13.

According to a third aspect of the invention, there is provided a computer program product operable to execute on a navigation device as claimed in claim 14.

### BRIEF DESCRIPTION OF THE DRAWINGS

**Figure 1** shows a navigation screen showing an alternative advice (in black text on a white background, at the lower right hand corner).
**Figure 2** shows a screen on which there are offered two advices that are local advices.
**Figure 3** shows a route in the direction of Maastricht, although the driver usually drives via Utrecht. To take away the driver's doubts about this unusual route, the alternative route advice via Utrecht is also shown, including the information that it is expected to take 40 minutes longer than the route via Maastricht.
**Figure 4** shows an example situation in which the driver took a wrong turn. To prevent a U-turn, the navigation system computed the shown route (the thick line running up the centre of the screen) with advice in white on a black background, at the centre of the bottom of the screen: turn left after 950 meters. The alternative is to make a U-turn: this is shown in black text on a white background at the lower left hand side of the screen.
**Figure 5** shows an example of a problem of the prior art.
**Figure 6** shows an example of a problem of the prior art.
**Figure 7** shows an example of a problem of the prior art.
**Figure 8** shows an example of a problem of the prior art.
**Figure 9** shows an example of a problem of the prior art.
**Figure 10** shows an example of a problem of the prior art.
**Figure 11** shows in comparison with Figure 10, that however there are many alternatives to the route shown in Fig. 10, each one being a similar distance and time.
**Figure 12** shows that satellite navigation devices only recommend one route, even though there may be a lot of viable alternatives.
**Figure 13** shows that the device screen shows viable alternatives, so that decisions can be made by the driver as and when required ("on the fly").
**Figure 14** shows that a 'Live' PND is not required eg. that a PND which receives traffic information is not required.
**Figure 15** shows that the device screen shows only viable alternatives.
**Figure 16** shows that dynamic points of interest on the driver's primary route as well as close to viable routes can be shown, encouraging discovery and going "off piste" eg. off route.
**Figure 17** shows that to keep the map view simple a 2 level interface allows for overview and detailed view.
**Figure 18** shows that satellite navigation technology of the prior art had an "obey me" psychology i.e. the driver was expected to obey instructions produced by a navigation device. However, the new approach may be expressed as "you choose" i.e. the user is given a choice as part of the navigation information provision.
**Figure 19** shows a prior art screen shot from a navigation device showing various route planning functions that enable a user to require the device to plot a new route to the destination that (i) is an alternative route; (ii) avoids a roadblock immediately ahead; (iii) avoids predefined roads or (iv) is a reversion to the original route.

### DETAILED DESCRIPTION

### Aspects of the technical problem

Instead of users relying on their navigation systems, seasoned users trust their own judgment more and more, especially in well-known areas. In that sense, what those users seek from a navigation system is confirmation that their judgment is right. Even more so, measures built-in to the navigation system designed to e.g. increase security, may actually contribute to a user distrusting the device, since the user may be better at estimating the situation.

One such example is the avoidance of U-turns that many navigation systems supply. For instance, after taking a wrong turn somewhere, often the fastest route is to drive in the reverse direction on the current road. Because making a U-turn is sometimes dangerous, or for some vehicles nearly impossible, most navigation systems try to prevent U-turns by putting a high penalty on them in their route planner algorithms. The result is often a route with several turns in a nearby residential area, or in rural areas through some roads between the fields, to avoid making a U-turn. Even if a more complex planning algorithm tries to avoid these situations, the outcome is often a longer route at best.

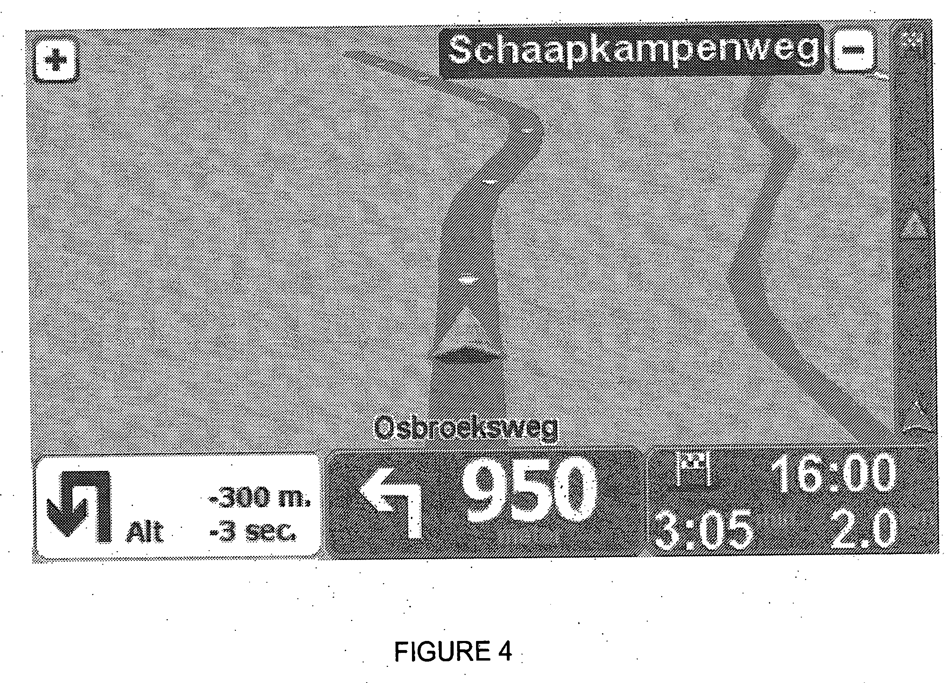

When unlucky, the system sends you and your caravan down a steep hill over a poor quality road, while you were on a wide empty road with plenty of turn possibilities. Typically, the user is able to make a better judgment about whether he can make the U-turn. Unfortunately, the navigation system does not inform the user that the presented advice is actually meant to prevent a U-turn. This can be solved by showing an alternative advice icon, showing a U-turn (See for example the screenshot in Figure 4, and related explanation below).

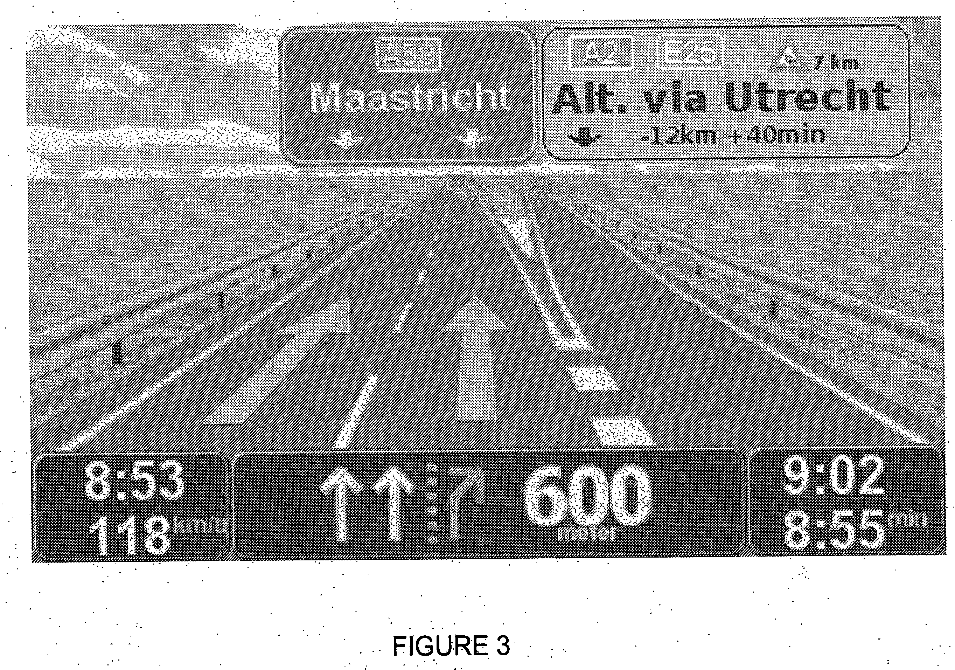

Another example is an advice that deviates from the route that the driver normally drives, as a result of a traffic jam. Such advice reduces the confidence that users have in their navigation system, because it deviates from what a driver expects in a well-known area. By showing the original advice as well, augmented with the difference in distance and travel time, the user is reassured that the system has made the right choice for him. An example alternative advice is "Straight on -> 12 km shorter, 30 minutes longer, 9 km traffic jam". A similar example is shown as a screenshot in Figure 3.

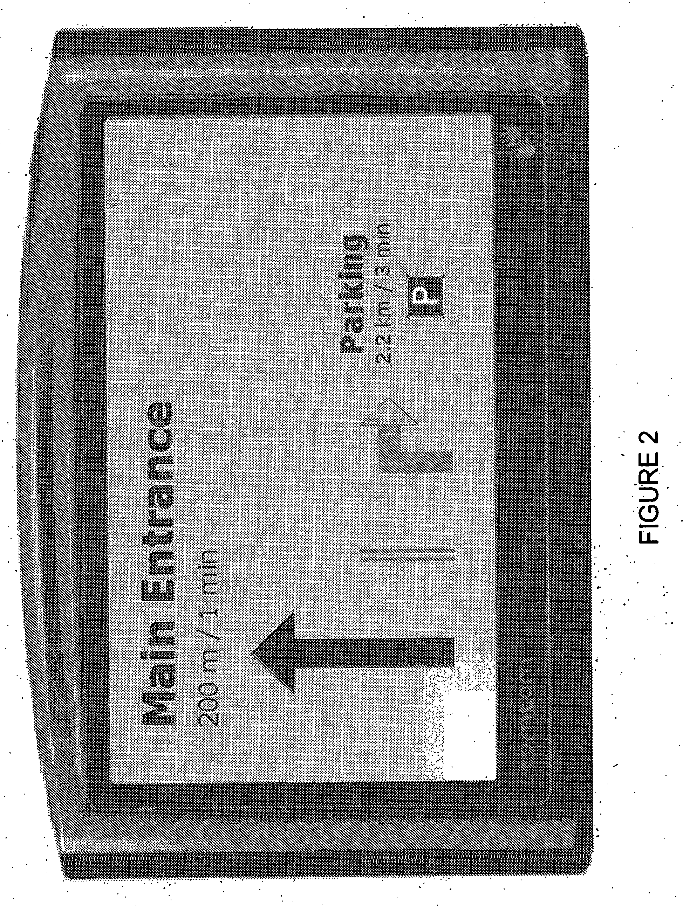

Yet another example is an alternative advice that sends you to the nearest parking or rest area, in the case that you've been driving for quite a long time. Currently, TomTom™ systems show a warning in such a case; the user is helped even more if he's provided with the alternative advice as well. A similar solution can be used in connected cars that run low on fuel, where the alternative advice belongs to a route to a nearby fuel station. Or, if the selected destination is a point of interest (POI), the planned route is often directed to the main entrance, while the driver may prefer to go to a nearby parking area. As shown in Figure 2, a screen can be provided comprising the next navigation instruction to the selected destination (left hand side of screen), and the next navigation instruction to a convenient parking area (right hand side of screen).

Another possibility is to use the alternative advice as the starting point of an alternative route to the same destination. For instance, in The Netherlands, a route from Eindhoven to The Hague can go via Utrecht, or via Rotterdam. A few points on the navigator-preferred route (via Utrecht) are important junctions at which an alternative route via Rotterdam can start. At these junctions, the system can show the alternative advice, showing the difference in length and time, and the distinguishing property of that route: "via Rotterdam".

Optionally, the verbosity of alternative advices can be made configurable. A more verbose example would be to offer alternative advices at each crossing, or at almost each crossing. This can be handy if you're on a crossing and a truck blocks the advised road ahead and you have to choose between a right turn and a left turn. Optionally, this advice can be augmented with the difference in length and time, and optionally, if the last part of the route is shared with the original route, the length that is replaced with respect to original route. Optionally, high verbosity alternatives can be given on demand, e.g. by pressing some panel or button on the screen. The importance or type of alternative advice can be distinguished based on the different guidance icons or colours being used.

An additional idea is a navigation system with the following property: if the driver follows an alternative advice, the system considers the route associated with that advice to be the new main route. So, without the user touching the screen, the user informs the system that he wants to follow the alternative route, simply by driving that way. For example, a user decides to take a different route home and leaves the highway. Since the detour is possibly longer and follows roads with a lower speed limit than the highway, the current route planner and navigation system will keep planning the user back to the highway until a point has been found where the alternative route is faster, which could take almost all the way to the user's house. Additionally, the user may be annoyed with advices to turn at every side-road he passes. With the system detecting that the user is deviating, a simple action (or no action at all) could indicate to the system that the user is not planning to follow the original route, thus reducing the possibly distracting advices or requiring the user to manually find an alternative for the original, faster route.

### How has the problem been solved up to now?

To our knowledge this problem has not been solved yet. One option a doubtful driver has, is to investigate his own alternative idea by interacting with his navigation system, which can be quite a hassle while driving (e.g. zoom out to see if this advice is to avoid a u-turn, or zoom and scroll through a route overview to find out whether the traffic on the original route is actually really bad, or experiment with blocked route lengths to try force the system to come up with the wanted alternative). Another option is to just drive the other way and try to get far enough from the old route so that the system may follow the idea the driver had, but that might not work very well.

### Technical Features

As already mentioned in "Aspects of the Technical Problem", the user is provided with an alternative advice. This can for instance be:
- Separate advice icons shown on the screen. These are such that it is clear to the user that this is an alternative advice, e.g. because it has a different colour, or a different background colour, or a different style, or a different location on the screen: The route corresponding to the separate advice could be shown on the screen in a different colour or style to the original route.
- Spoken alternative advices, e.g. "Turn right here, or turn left to travel via Rotterdam", or "To park, turn right here. To drive on to the entrance, go straight ahead"
- Based on the type of advice and/ or road conditions, the system may choose to alter the information given. The system may for example opt not to offer the U-turn advice since a road segment is known to be very busy or to have a history of accidents.

To determine which alternatives to show, the navigation system software is able to:
- Automatically compute alternative routes: these are for instance routes that have roughly similar costs to the best found route, but that overlap for a small amount with the best route. For such an alternative route, the navigation system is able to determine the discriminating property with respect to the other routes. This can for instance be by a large city or by an important highway (e.g. "via Rotterdam", "via A12").
- In case of multiple alternative advices at some point, the navigation system is able to assign some sort of priority to each alternative, to determine which one(s) will be shown.

Naturally, the addition of such a feature to a system should never lead to a driver becoming confused or distracted. To reduce the risk of such an effect, the system could opt to only present advices under particular conditions e.g. under certain speed limits, on certain types of roads, etc.

### which advantages are gained by the "technical features" above?

Currently, a driver that has an alternative route or sub-route in mind, has to go through quite a lot of interactive steps on his navigation system to find out whether his alternative idea is a good idea. This is often possible (e.g. go to route overview, plan alternative routes by blocking the first so-many guessed meters, etc.), but can be quite a hassle, because such alternative route ideas usually arise while driving.

The alternative advices presented herein anticipate these ideas the driver might have, and show him instantly the consequences of that idea. This eliminates most of the frustration that users of navigation systems have: being sent into a direction not understood by the user. This improvement alone results in a highly improved user experience. For those advices not doubted by the user, showing useful alternative advices is a nice service to the user.

Navigation systems that are able to increase driver confidence may be an important differentiator in the market.

### Drawing(s)/picture(s) of example(s) or alternative solution(s) with reference to "technical features" section

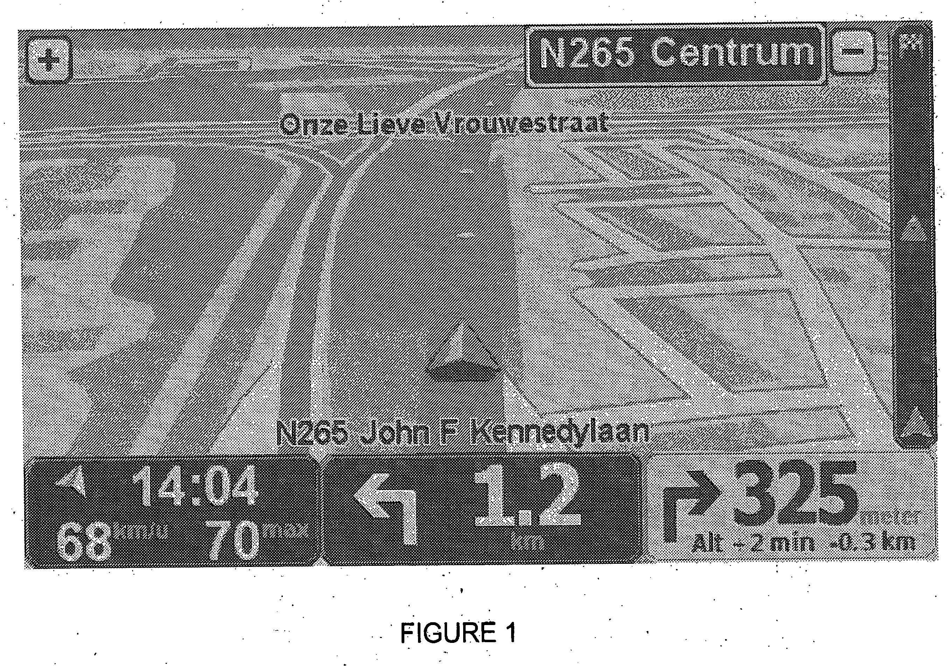

Figure 1 shows a navigation screen showing an alternative advice (in black text on a white background, at the lower right hand corner). The alternative advice belongs to a local alternative route which is 0.3 km shorter and takes 2 minutes longer, as indicated. The normal advice is given in the centre of the bottom of the screen.
Figure 2 shows a screen on which there are offered two advices that are local advices. The main advice is towards the destination (left hand side of screen). The system offers an alternative to go to a nearby parking place (right hand side of screen).
Figure 3: in this example in The Netherlands, the navigation system presents a route in the direction of Maastricht, although the driver usually drives via Utrecht. To take away the driver's doubts about this unusual route, the alternative route advice via Utrecht is also shown, including the information that it is expected to take 40 minutes longer than the route via Maastricht. (The alternative route can be computed in several ways, e.g. by not considering traffic information (such as by considering what would be the best route if there were no traffic, but then computing the actual travel time required for that route), or by keeping track of routes that have been followed by this driver in the past). Here, information about the alternative route is shown in the form of a road sign, in particular as a modified road sign.
Figure 4: this is an example situation in which the driver took a wrong turn. To prevent a U-turn, the navigation system computed the shown route (the thick line running up the centre of the screen) with advice in white on a black background, at the centre of the bottom of the screen: turn left after 950 meters. The alternative is to make a U-turn: this is shown in black text on a white background at the lower left hand side of the screen. This alternative route would be 300 meters shorter, but the driver can see for himself that it's not worth the hassle, since it only saves 3 seconds. (The presented time may include a U-turn time penalty, which can be static in the computation algorithm, but which can also be recorded for this driver from earlier U-turns, or which can be collected for this specific location for multiple drivers. In the latter case U-turn times would have to be uploaded to the navigation device, so that the average U-turn time for this location or road type can be computed and/or optionally adapted to this driver's profile).

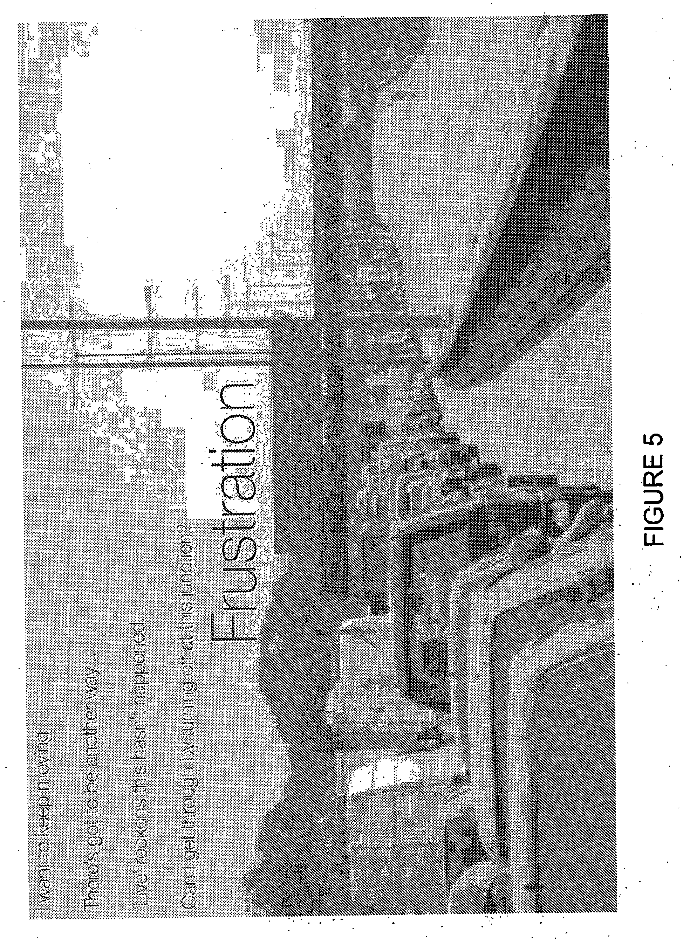

Figure 5 shows an example of a problem of the prior art. The driver experiences frustration because he is sitting in a traffic jam and thinks "I want to keep moving. There's got to be another way... 'Live' reckons this hasn't happened... Can I get through by turning off at this junction?" Here, 'Live' refers to a traffic information service for a navigation device.

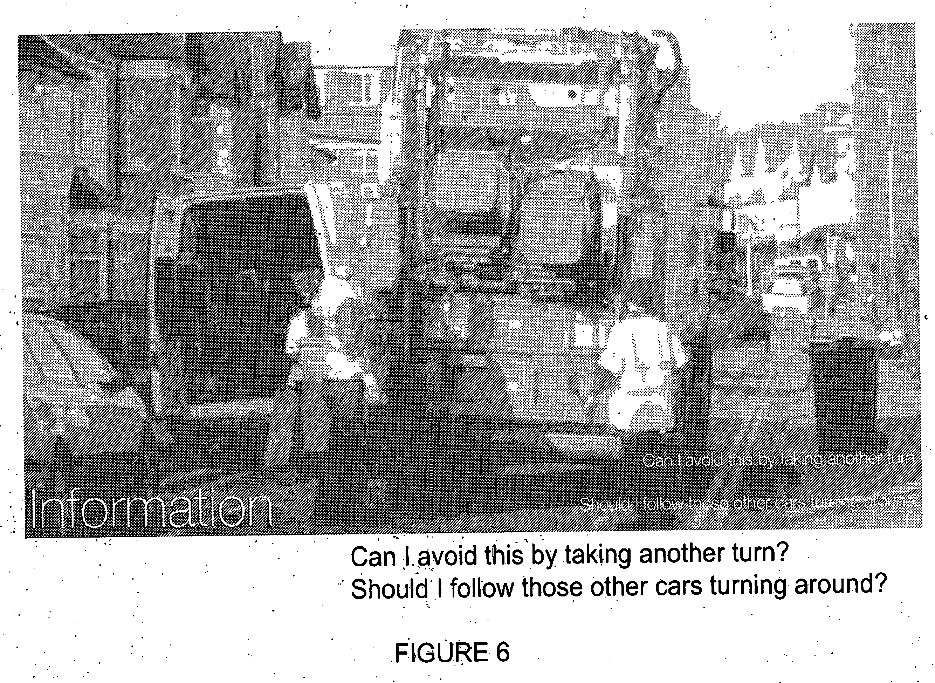

Figure 6 shows an example of a problem of the prior art. The driver sees an obstructed street and lacks pertinent information. The driver thinks "Can I avoid this by taking another turn? Should I follow those other cars turning around?" But the driver does not know the answers to these questions, and his navigation device does not readily provide the answers either.

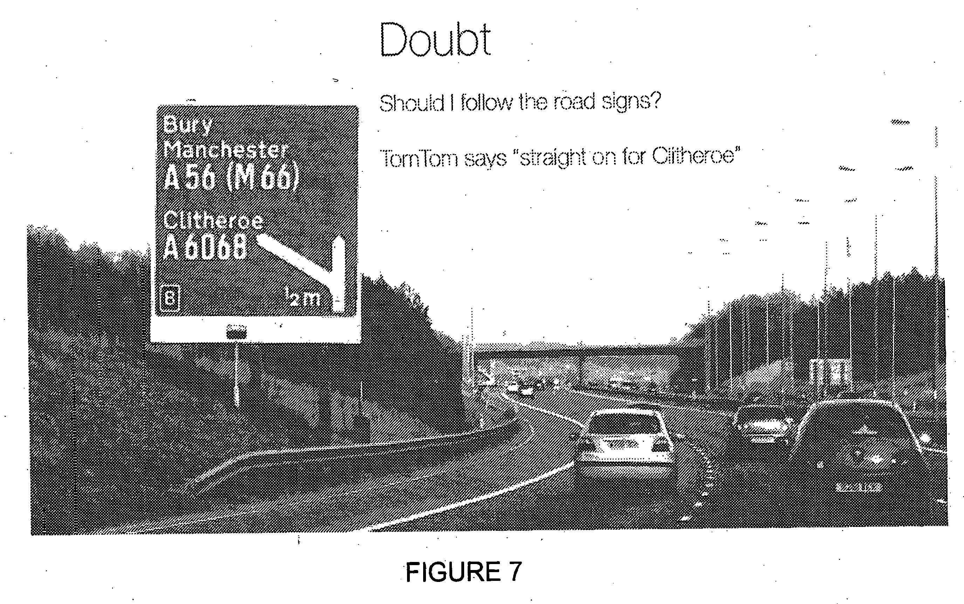

Figure 7 shows an example of a problem of the prior art. The driver is told by the navigation device to drive past the exit to proceed towards his destination, but the road signpost shows that taking the exit is apparently the way to his destination, which is in Clitherhoe. The driver experiences doubt about whether to follow the advice of the navigation device, or whether to follow the road sign.

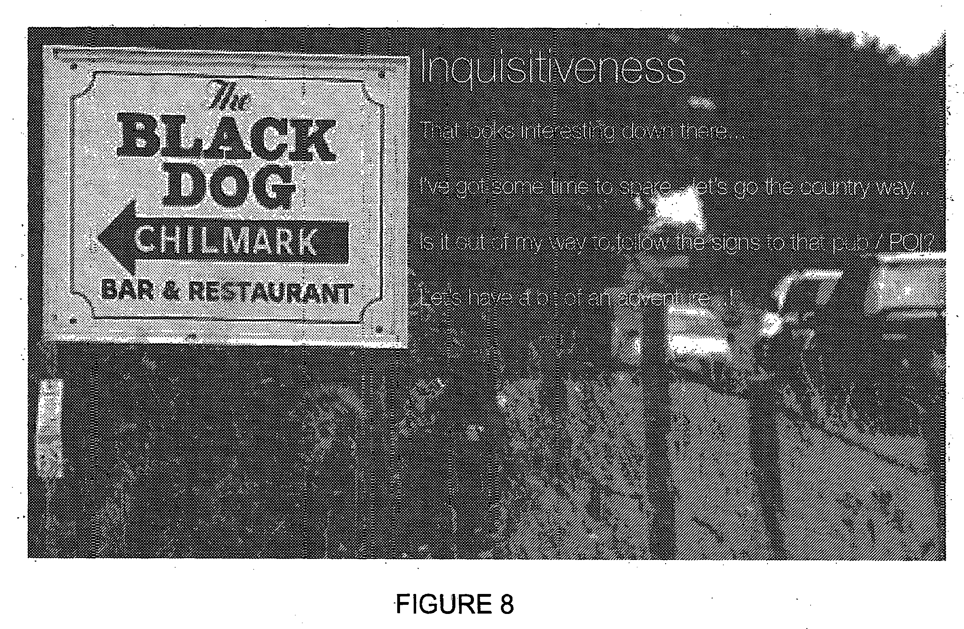

Figure 8 shows an example of a problem of the prior art. The driver thinks "That looks interesting down there... I've got some time to spare - let's go the country way... Is it out of my way to follow the signs to that pub/point of interest (POI)? Let's have a bit of an adventure...!" The driver has experienced inquisitiveness, but the navigation system of the prior art does not readily provide the desired information.

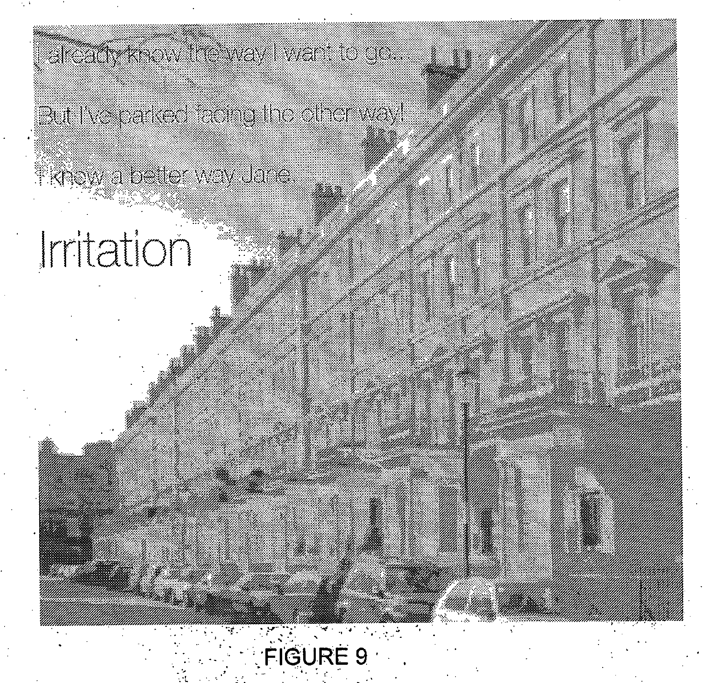

Figure 9 shows an example of a problem of the prior art. The driver says "I already know the way I want to go... But I've parked facing the other way! I know a better way Jane." The driver experiences irritation.

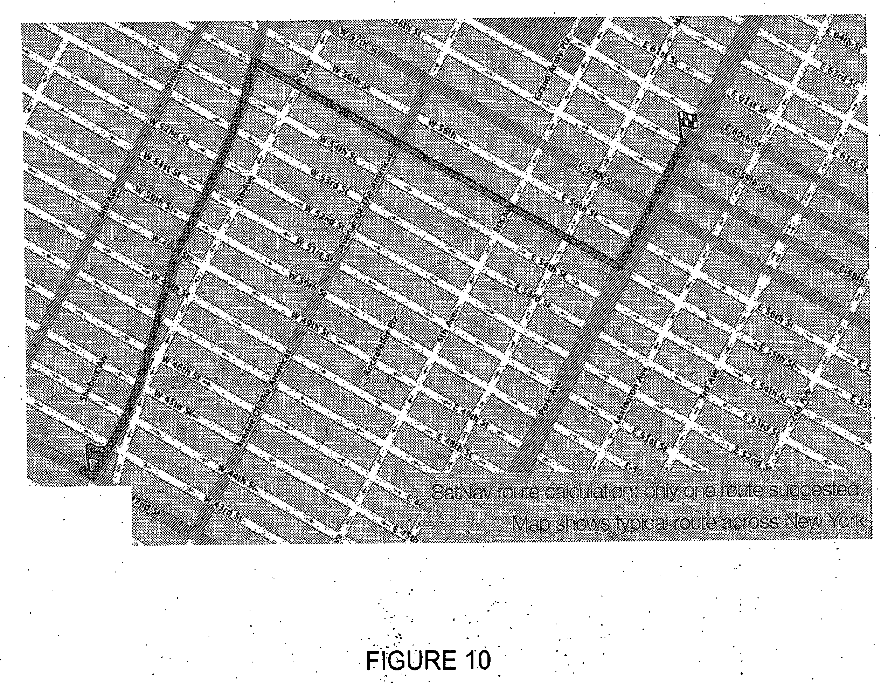

Figure 10 shows an example of a problem of the prior art. In satellite navigation device route calculation, only one route may be suggested. The map shows a typical route across New York.

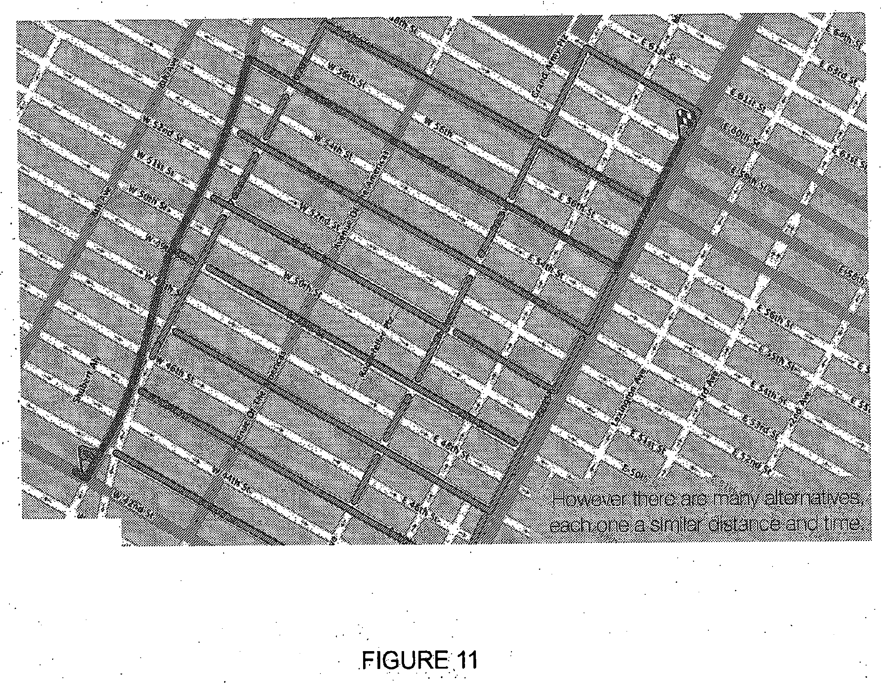

Figure 11 shows, in comparison with Figure 10, that however there are many alternatives to the route shown in Fig. 10, each one being a similar distance and time.

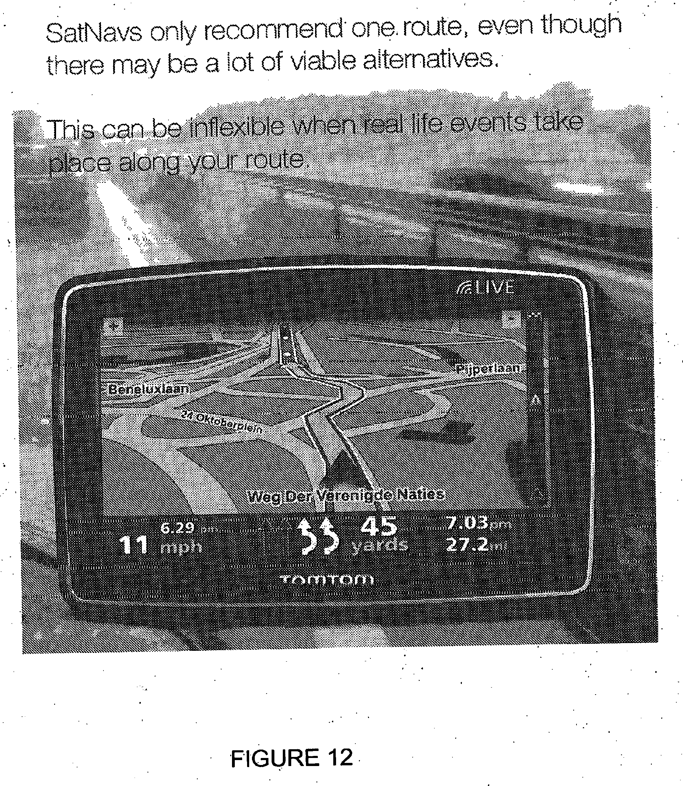

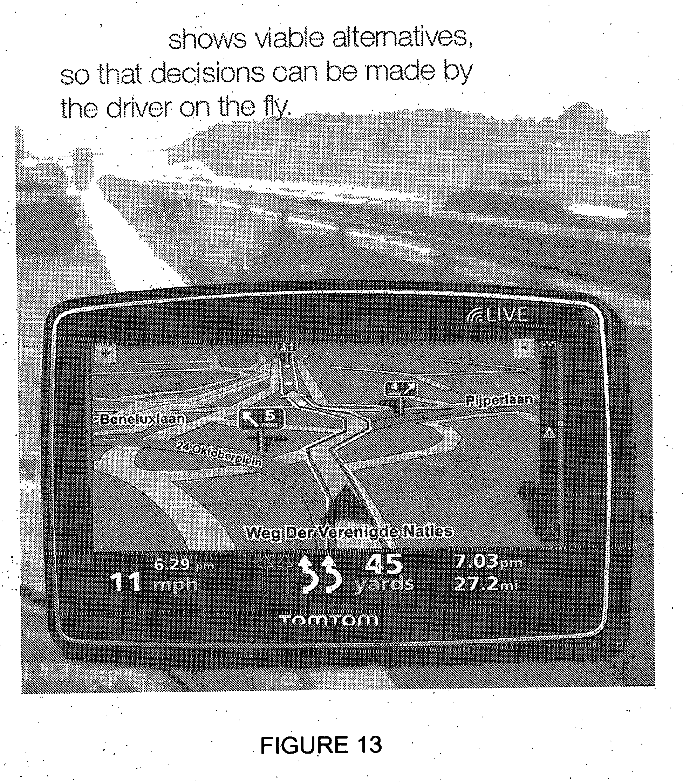

In Figure 12 it is shown that satellite navigation devices only recommend one route, even though there may be a lot of viable alternatives. This can be inflexible when real life events take place along your route. In Figure 13, the device screen shows viable alternatives, so that decisions can be made by the driver as and when required ("on the fly"). In Figure 13, a viable alternative to each of the left and right of the planned route is shown. The viable alternative is indicated in the map screen by an icon. The icon shows a direction to be taken from the planned route. The icon shows the journey time required (or the difference in the journey time required) if the viable alternative is selected in preference to the planned route.

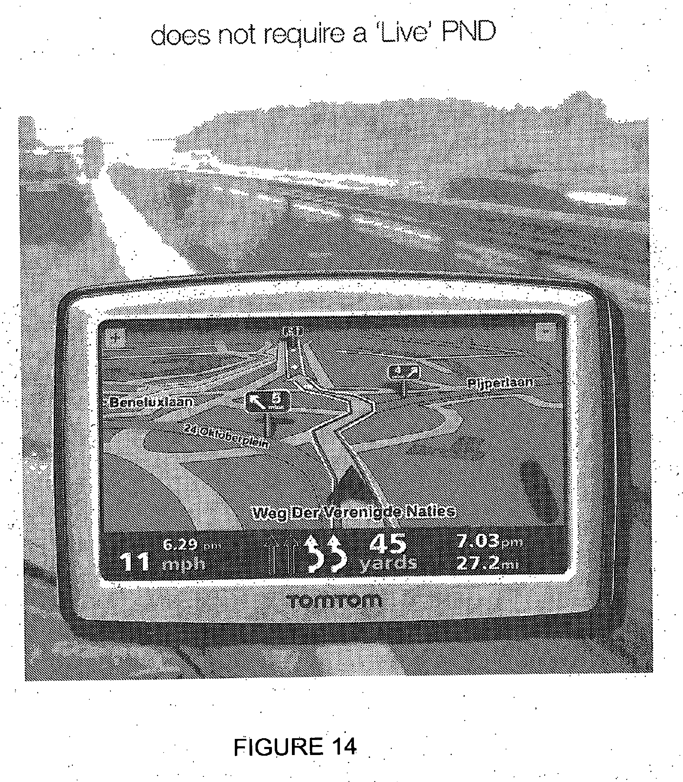

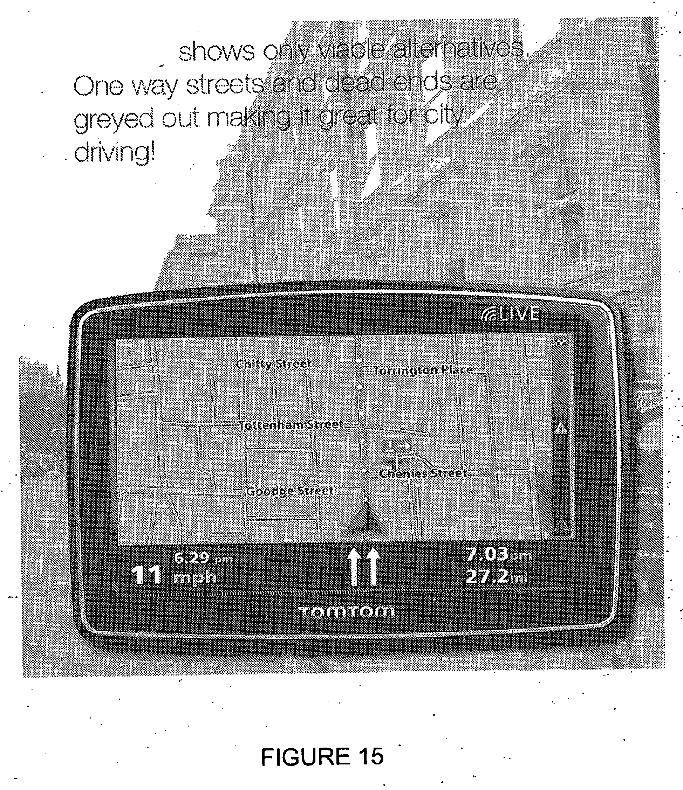

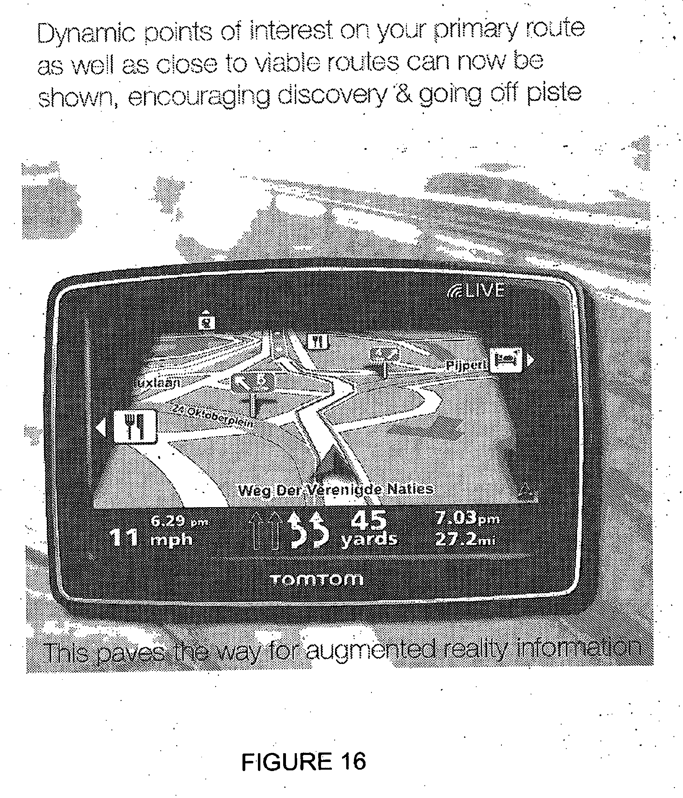

In Figure 14, it is shown that a 'Live' PND is not required i.e. that a portable navigation device or a personal navigation device or a portable personal navigation device which receives traffic information is not required. In general, the navigation device need not be able to receive traffic information. In Figure 15 it is shown that the device screen shows only viable alternatives. One way streets and dead ends are greyed out making it great for city driving. In Figure 16, it is noted that dynamic points of interest on the driver's primary route as well as close to viable routes can be shown, encouraging discovery and going "off piste" eg. off route. This paves the way for augmented reality information.

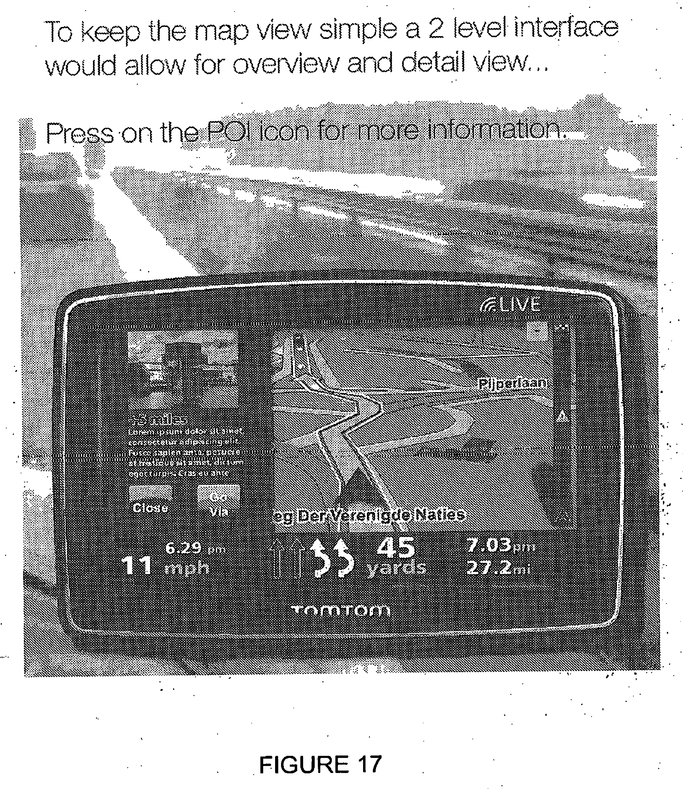

In Figure 17 it is shown that to keep the map view simple a 2 level interface allows for overview and detailed view. The user can press on a POI icon for more information about a POI past which an alternative route may be provided. After the information is supplied, the user can press "go via" or "close" which respectively select or reject the alternative route via the POI.

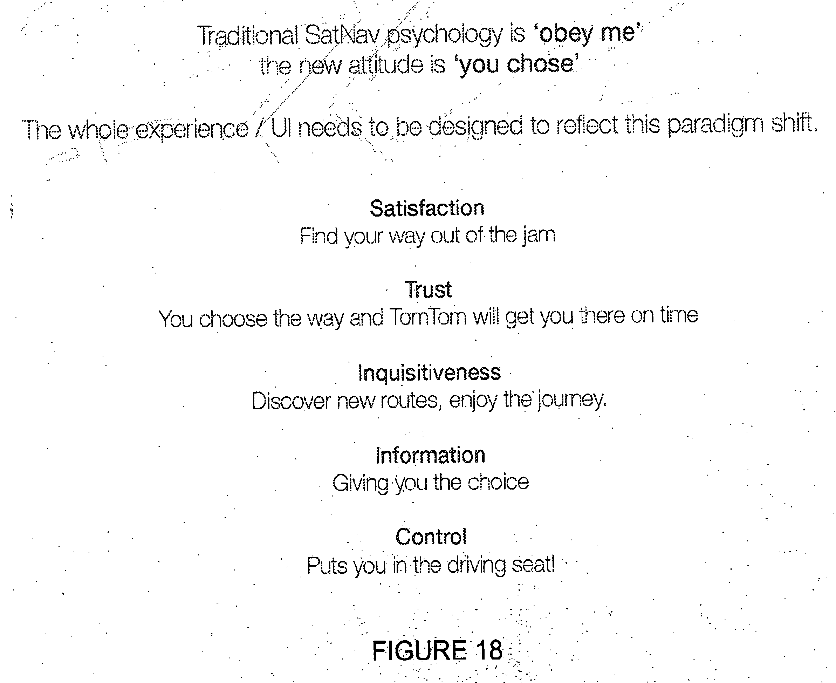

In Figure 18, it is shown that satellite navigation technology of the prior art had an "obey me" psychology i.e. the driver was expected to obey instructions produced by a navigation device. However, the new approach may be expressed as "you choose" i.e. the user is given a choice as part of the navigation information provision. The whole experience and user interface needs to be designed to reflect this paradigm shift. The user may experience satisfaction, such as when finding his way out of a traffic jam. The user may experience trust in the navigation service: the user chooses the way, and the navigation device provides the navigation directions. The user may have his inquisitiveness satisfied: new routes may be discovered, and the journey may be enjoyed more. The user may receive information, giving the user a choice. The user may experience improved control of the navigation experience.

Throughout this document, it should be understood that in the context of navigation, "advice" refers to a possible navigation instruction, and "advices" refers to one or more possible navigation instructions. It will be appreciated by those skilled in the art that an alternative navigation instruction may be provided on the screen, by voice, or both on screen and by voice.

### Appendix 1 - Navigation devices

A navigation device can be programmed with a map database and is programmed with software that enables a route to be planned to a destination. The device can be further programmed to be able to display a navigation map on a touch screen display, the map updating the current position of the device. The navigation device may be used as an in-vehicle navigation system. Navigation may also be implemented in any arrangement of navigation device, such as a portable device, an in-built vehicle device, or a device designed for non-vehicle use (e.g. for walkers) or vehicles other than cars (e.g. aircraft).

The navigation device may implement any kind of position sensing technology and is not limited to GPS; it can hence be implemented using other kinds of GNSS (global navigation satellite system) such as the European Galileo system. Equally, it is not limited to satellite based location/dead reckoning systems but can equally be deployed using ground-based beacons or any other kind of system that enables the device to determine its geographic location.

Navigation software, when running on a navigation device, may result in a navigation device that causes a normal navigation mode screen to be shown (see e.g. Figs. 1 and 2 of WO2004/076976A1). This view provides driving instructions using a combination of text, symbols, voice guidance and a moving map. Key user interface elements are the following: a 2-D or 3-D map occupies most of the screen. The map shows the user's car and its immediate surroundings, rotated in such a way that the direction in which the car is moving is always "up". Running across the bottom quarter of the screen is the status bar. The current location of the device, as the device itself determines using conventional GPS location finding and its orientation (as inferred from its direction of travel) are depicted by an arrow. The route calculated by the device (using route calculation algorithms stored in device memory as applied to map data stored in a map database in device memory) is shown as darkened path superimposed with arrows giving the travel direction. On the darkened path, all major actions (e.g. turning corners, crossroads, roundabouts etc.) are schematically depicted by arrows overlaying the path. The status bar also includes at its left hand side a schematic depicting the next action (e.g. a right turn). The status bar also shows the distance to the next action (e.g. right turn at a distance of 220 meters) as extracted from a database of the entire route calculated by the device (i.e. a list of all roads and related actions defining the route to be taken). Status bar also shows the name of the current road, the estimated time before arrival (eg. 2 minutes and 40 seconds), the actual estimated arrival time (eg. 11.36 am) and the distance to the destination (eg. 1.4 km). The GPS signal strength is shown in a mobile-phone style signal strength indicator.

If die user touches the centre of the screen, then a navigation screen menu may be displayed; from this menu, other core navigation functions within the navigation application can be initiated or controlled. Allowing core navigation functions to be selected from a menu screen that is itself very readily called up (e.g. one step away from the map display to the menu screen) greatly simplifies the user interaction and makes it faster and easier.

In normal navigation mode, the device may display a map. Touching the map (i.e. the touch sensitive display) once (or twice in a different implementation) near to the screen centre (or any part of the screen in another implementation) may then call up a navigation menu (see eg. Figure 19) with large icons corresponding to various navigation functions, such as the option to calculate an alternative route, and re-calculate the route so as to avoid the next section of road (useful when faced with an obstruction or heavy congestion); or recalculate the route so as to avoid specific, listed roads.

The actual physical structure of the device itself may be fundamentally no different from any conventional handheld computer, other than the integral GPS receiver or a GPS data feed from an external GPS receiver. Hence, memory stores the route calculation algorithms, map database and user interface software; a microprocessor interprets and processes user input (e.g. using a device touch screen to input the destination and all other control inputs) and deploys the route calculation algorithms to calculate the optimal route. 'Optimal' may refer to criteria such as shortest time or shortest distance, or some other user-related factors.

More specifically, the user may input his required destination in the normal manner into the navigation software running on the navigation device eg. using a virtual keyboard. The user then selects the manner in which a travel route is calculated: various modes are offered, such as a 'fast' mode that calculates the route very rapidly, but the route might not be the shortest; a 'full' mode that looks at all possible routes and locates the shortest, but takes longer to calculate etc. Other options are possible, with a user defining a route that is scenic - e.g. passes the most POI (points of interest) marked as views of outstanding beauty, or passes the most POIs of possible interest to children or uses the fewest junctions etc.

Roads themselves are described in the map database in the device memory (or the map database is otherwise accessed by the navigation application eg. remotely) as lines - i.e. vectors (e.g. start point, end point, direction for a road, with an entire road being made up of many hundreds of such sections, each uniquely defined by start point/ end point direction parameters). A map includes a set of such road vectors, plus points of interest (POIs), plus road names, plus other geographic features like park boundaries, river boundaries etc, all of which are defined in terms of vectors. Map features (e.g. road vectors, POIs etc.) are defined in a co-ordinate system that corresponds or relates to the GPS co-ordinate system, enabling a device's position as determined through a GPS system to be located onto the relevant road shown in a map.

Route calculation uses complex algorithms that are part of the navigation software. The algorithms are applied to score large numbers of potential different routes. The navigation software then evaluates them against the user defined criteria (or device defaults), such as a full mode scan, with scenic route, past museums, and no speed camera. The route which best meets the defined criteria is then calculated by a processor in the device and then stored in a database in RAM as a sequence of vectors, road names and actions to be done at vector end-points (e.g. corresponding to pre-determined distances along each road of the route, such as after 100 meters, turn left into street x).

### Appendix 2 - Traffic information

Regarding traffic information, in US6650948(B1) there is disclosed a method for monitoring vehicular traffic flow in a road network in an area served by a mobile telecommunications device network having a call management system provided with a mobile telecommunications device positioning system providing positional data for active mobile telecommunications devices. The method comprises capturing geographical positioning data for individual active devices carried aboard vehicles and converting these into probability vectors representing the likelihood of the vehicle having arrived at any of the possible road components of the road network compatible with the geographical positional data. As the vehicle travels along, this process is repeated and new probability vectors constructed based on the probability of any of the available routes between the new probability vector road component position and the immediately preceding probability vector road component position. The expected transit time for the available routes are computed and compared with actual transit times to provide delay factors for the available routes and thereby the road components thereof. Average delay factors are obtained by making use of data obtained for other vehicles thereby to provide a report indicative of the degree of traffic congestion and delay on the roads. There is also provided apparatus and computer software program products for use in implementing the method.

In WO2007057696(A1) there is disclosed a navigation device displaying a route superimposed on a road map, together with one or more symbols each indicating a location for which audio or visual traffic information exists, each symbol being selectable to play back the audio or visual information. Visual traffic information can be from a fixed traffic camera; a driver can hence rapidly view a video feed or still image from a traffic camera to allow him to assess the traffic conditions.

In WO2008110321(A1) there is disclosed a navigation device which has a GPRS (General Packet Radio Service) receiver for receiving real-time information about slow traffic flow or slow average speed on a stretch of motorway, indicating congestion. The device calculates a new itinerary to avoid the congestion, based on historically recorded speeds on secondary roads weighed by the current average speed in the congestion area.

In WO2009080067(A1) there is disclosed a method of providing a graphical indication of traffic congestion along a stretch of physical road notionally divided by a traffic information provider into one or more road segments.

In WO2010012295(A1) there is disclosed a navigation device comprising a traffic information receiving means for receiving traffic information corresponding to a plurality of geographical areas; a memory storing route information indicative of a route between at least first and second locations; and a processor which is arranged to selectively utilise traffic information corresponding to geographical areas according to the route information.

In WO2010081538(A2) there is disclosed a navigation device comprising a processor, a store for map data, means to access one or more types of additional information for use in route computation and a multiple route computation module arranged to determine a first route from a start location to a destination location using the map data and one or more types of additional information and to determine one or more additional routes using the map data and fewer, or different, types of additional information from the first route.

### Appendix 3

### CONCEPTS

There are multiple concepts (described as 'Concepts A - C' below) in this disclosure. The following may be helpful in defining these concepts.

### A. Navigation device operable to calculate routes to one destination

A navigation device, the navigation device operable to calculate routes to a destination, the device further operable to simultaneously display a navigation instruction for a main route together with an alternative navigation instruction for an alternative route, wherein the alternative route is computed by keeping track of routes that have been followed by a user of the navigation device in the past, and using a route that has been followed by the user in the past as the alternative route.

The navigation device may have the following features:
- device is operable to provide a navigation instruction and an alternative navigation instruction without user intervention.
- device comprises a screen.
- Device provides an alternative route without a user being required to request a calculation of an alternative route.
- Device is operable to calculate routes to more than one destination.
- Device provides an alternative route by showing an alternative advice icon.
- Device provides an alternative route advice and shows the original advice as well, augmented with the difference in distance and travel time.
- Device provides a screen displaying the next navigation instruction to the selected destination, and the next navigation instruction to a convenient parking area.
- Device provides an alternative advice which is the starting point of an alternative route to the same destination.
- Device provides a route; some points on the navigator-preferred route are important junctions at which an alternative route can start, and at these junctions, the system shows the alternative advice, showing the difference in length and time, and the distinguishing property of that route.
- Device is such that the verbosity of alternative advices is configurable.
- Device is such that alternative advices are provided at each crossing, or at almost each crossing.
- Device is such that alternative advices can be augmented with the difference in length and time.
- Device is such that high verbosity alternatives can be given on demand.
- Device is such that importance or type of alternative advice can be distinguished based on the different guidance icons or colours being used.
- Device is such that if the driver follows an alternative advice, the system considers the route associated with that advice to be the new main route.
- Device is such that without the user touching the screen, the user informs the system that he wants to follow the alternative route, simply by driving that way.
- Device is such that separate advice icons are shown on the screen.
- Device is such that alternative advice is identified because it has a different colour, or a different background colour, or a different style, or a different location on the screen.
- Device is such that the route corresponding to the separate advice is shown on the screen in a different colour to the original route.
- Device is such that alternative advices are spoken.
- Device is such that based on the type of advice and/or road conditions, the system may choose to alter the alternative advice given.
- Device is such that it automatically computes alternative routes.
- Device is such that in the case of multiple alternative advices at some point, the navigation system is able to assign a priority level to each alternative.
- Device is such that it only presents alternative advices under particular conditions.
- Device is such that it receives traffic information.
- Device is such that information about the alternative route is displayed in the form of a road sign.
- Device is such that information about the alternative route is displayed in the form of a modified road sign.
- Device is such that the presented time difference for the alternative route includes a U-turn time penalty.
- Device is such that the presented time difference for the alternative route includes a U-turn time penalty recorded for this driver from earlier U-turns.
- Device is such that the presented time difference for the alternative route includes a U-turn time penalty which can be collected for this specific location for multiple drivers.
- Device is such that the device screen shows viable alternatives, so that decisions can be made by the driver as and when required.
- Device is such that the device screen shows a viable alternative indicated in the map screen by an icon.
- Device is such that the device screen shows a viable alternative indicated in the map screen by an icon, where the icon shows a direction to be taken from the planned route.
- Device is such that the device screen shows a viable alternative indicated in the map screen by an icon, where icon shows the journey time required, or the difference in the journey time required, if the viable alternative is selected in preference to the planned route.
- Device is such that it is not able to receive traffic information.
- Device is such that points of interest on the driver's primary route as well as close to viable routes can be shown dynamically i.e. as a function of journey progress.
- Device is such that the user can press on a POI icon for more information about a POI past which an alternative route may be provided.
- Device is such that it can be programmed with a map database.
- Device is such that it can be further programmed to be able to display a navigation map on a touch screen display, the map updating the current position of the device.
- Device is such that it may be used as an in-vehicle navigation system.
- Device is such that it is a portable device, an in-built vehicle device, or a device designed for non-vehicle use (e.g. for walkers) or in vehicles other than cars.
- Device is such that if the user touches the centre of the screen, then a navigation screen menu is displayed.
- Device may be an in-vehicle navigation system.
- Device may be a portable device, or an in-built vehicle device, or a device designed for non-vehicle use, or a device designed for vehicles other than cars.

### B. Method of providing navigation instructions for a navigation device

Method of providing navigation instructions for a navigation device, the method comprising the steps of
(i) calculating routes to a destination,
(ii) simultaneously displaying a navigation instruction for a main route together with an alternative navigation instruction for an alternative route, wherein the alternative route is computed by keeping track of routes that have been followed by a user of the navigation device in the past, and using a route that has been followed by the user in the past as the alternative route.

The method may have the following features.
- the navigation instruction and the alternative navigation instruction are provided without user intervention.
- device comprises a screen.
- the navigation instruction and the alternative navigation instruction are displayed simultaneously on a device screen, the device implementing the method.
- the alternative route is provided without a user being required to request a calculation of an alternative route.
- routes calculated to more than one destination.

### C. Computer program product operable to execute on a navigation device, the computer program product operable to calculate routes to one destination.

Computer program product operable to execute on a navigation device, the computer program product operable to calculate routes to a destination, the computer program product further operable to simultaneously display a navigation instruction for a main route together with an alternative navigation instruction for an alternative route; wherein the alternative route is computed by keeping track of routes that have been followed by a user of the navigation device in the past, and using a route that has been followed by the user in the past as the alternative route.

The computer program product may have the following features.
- computer program product is operable to provide a navigation instruction and an alternative navigation instruction without user intervention.
- computer program product is operable to display on a device screen a navigation instruction and an alternative navigation instruction simultaneously.
- computer program product is operable to provide an alternative route without a user being required to request a calculation of an alternative route.
- computer program product is operable to calculate routes to more than one destination.

## Claims

1. A navigation device, the navigation device operable to calculate routes to a destination, the device further operable to simultaneously display a navigation instruction for a main route together with an alternative navigation instruction for an alternative route on a screen of the navigation device,
**characterised in that**:
the navigation device is operable to compute the alternative route by keeping track of routes that have been followed by a user of the navigation device in the past, and using a route that has been followed by the user in the past as the alternative route.

2. The navigation device of claim 1, wherein the device is operable to display the navigation instruction for the main route and the alternative navigation instruction for the alternative route without user intervention.

3. The navigation device of any previous claim, wherein the device is operable to simultaneously display a difference in distance and travel time between the main route and the alternative route together with the navigation instruction for the main route and the alternative navigation instruction for the alternative route.

4. The navigation device of any previous claim, wherein the main route is a preferred route from an origin to the destination, said main route including at least some points being important junctions at which the alternative route to the destination can start, and, at these junctions, the device is operable to simultaneously display a difference in distance and travel time between the main route and the alternative route and a distinguishing property of the alternative route together with the navigation instruction for the main route and the alternative navigation instruction for the alternative route.

5. The navigation device of any previous claim, wherein the device is operable such that if a driver follows the alternative navigation instruction, the device considers the alternative route associated with the alternative navigation instruction to be the new main route.

6. The navigation device of any previous claim, wherein the device is operable such that without a user touching the screen, the user informs the device that he wants to follow the alternative route, simply by driving that way.

7. The navigation device of any previous claim, wherein the device receives traffic information.

8. The navigation device of any previous claim, wherein the device is a portable device, or an in-built vehicle device, or a device designed for non-vehicle use, or a device designed for vehicles other than cars.

9. A method of providing navigation instructions for a navigation device, the method comprising the steps of:
calculating routes to a destination, said routes including a main route and an alternative route; and
providing for simultaneous display on a screen of the navigation device a navigation instruction for the main route together with an alternative navigation instruction for the alternative route,
**characterised in that**:
the alternative route is computed by keeping track of routes that have been followed by a user of the navigation device in the past, and using a route that has been followed by the user in the past as the alternative route.

10. Computer program product comprising computer readable instructions that, when executed on a navigation device, cause the navigation device to perform the method of claim 9.

## Patentansprüche

1. Navigationsvorrichtung, wobei die Navigationsvorrichtung betrieben werden kann, um Routen zu einem Ziel zu berechnen, wobei die Vorrichtung ferner betrieben werden kann, um gleichzeitig eine Navigationsanweisung für eine Hauptroute gemeinsam mit einer alternativen Navigationsanweisung für eine alternative Route auf einem Bildschirm der Navigationsvorrichtung anzuzeigen,
**dadurch gekennzeichnet, dass**:
die Navigationsvorrichtung betrieben werden kann, um die alternative Route zu berechnen, indem Routen mitverfolgt werden, welchen der Benutzer der Navigationsvorrichtung in der Vergangenheit bereits gefolgt ist, und indem eine Route verwendet wird, der der Benutzer in der Vergangenheit als die alternative Route gefolgt ist.

2. Navigationsvorrichtung nach Anspruch 1, wobei die Vorrichtung betrieben werden kann, um die Navigationsanweisung für die Hauptroute und die alternative Navigationsanweisung für die alternative Route ohne Benutzereingriff anzuzeigen.

3. Navigationsvorrichtung nach einem der vorhergehenden Ansprüche, wobei die Vorrichtung betrieben werden kann, um gleichzeitig einen Unterschied der Entfernung und Reisezeit zwischen der Hauptroute und der alternativen Route gemeinsam mit der Navigationsanweisung für die Hauptroute und die alternative Navigationsanweisung für die alternative Route anzuzeigen.

4. Navigationsvorrichtung nach einem der vorhergehenden Ansprüche, wobei die Hauptroute eine bevorzugte Route von einem Ursprung zu dem Ziel ist, wobei die Hauptroute mindestens einige Punkte aufweist, die wichtige Verbindungen sind, an welchen die alternative Route zu dem Ziel beginnen kann, und, an diesen Verbindungen, die Vorrichtung betrieben werden kann, um gleichzeitig einen Unterschied der Entfernung und der Reisezeit zwischen der Hauptroute und der alternativen Route und ein unterscheidendes Merkmal der alternativen Route gemeinsam mit der Navigationsanweisung für die Hauptroute und die alternative Navigationsanweisung für die alternative Route anzuzeigen.

5. Navigationsvorrichtung nach einem der vorhergehenden Ansprüche, wobei die Vorrichtung derart betrieben werden kann, dass, falls ein Fahrer der alternativen Navigationsanweisung folgt, die Vorrichtung davon ausgeht, dass die alternative Route assoziiert mit der alternativen Navigationsanweisung die neue Hauptroute ist.

6. Navigationsvorrichtung nach einem der vorhergehenden Ansprüche, wobei die Vorrichtung derart betrieben werden kann, dass, ohne dass ein Benutzer den Bildschirm berührt, der Benutzer die Vorrichtung informiert, dass er der alternativen Route folgen will, indem er einfach dorthin fährt.

7. Navigationsvorrichtung nach einem der vorhergehenden Ansprüche, wobei die Vorrichtung Verkehrsinformationen empfängt.

8. Navigationsvorrichtung nach einem der vorhergehenden Ansprüche, wobei die Vorrichtung ein tragbares Gerät ist, oder ein in ein Fahrzeug eingebautes Gerät, oder eine Vorrichtung, die für Nicht-Fahrzeug-Gebrauch konzipiert ist, oder eine Vorrichtung, die für andere Fahrzeuge als PKWs konzipiert ist.

9. Verfahren zum Bereitstellen von Navigationsanweisungen für eine Navigationsvorrichtung, wobei das Verfahren die folgenden Schritte aufweist:
Berechnen von Routen zu einem Ziel, wobei die Routen eine Hauptroute und eine alternative Route aufweisen, und
Bereitstellen gleichzeitiger Anzeige auf einem Bildschirm der Navigationsvorrichtung einer Navigationsanweisung für die Hauptroute gemeinsam mit einer alternativen Navigationsanweisung für die alternative Route,
**dadurch gekennzeichnet, dass**
die alternative Route berechnet wird, indem die Routen mitverfolgt werden, welchen ein Benutzer der Navigationsvorrichtung in der Vergangenheit gefolgt ist, und Verwenden einer Route, der der Benutzer in der Vergangenheit gefolgt ist, als die alternative Route.

10. Computerprogrammprodukt, das eine computerlesbare Anweisung umfasst, die, wenn sie auf einer Navigationsvorrichtung ausgeführt wird, die Navigationsvorrichtung veranlasst, das Verfahren nach Anspruch 9 auszuführen.

## Revendications

1. Dispositif de navigation, le dispositif de navigation pouvant être mis en oeuvre pour calculer des itinéraires jusqu'à une destination, le dispositif pouvant en outre être mis en oeuvre pour afficher simultanément une instruction de navigation pour un itinéraire principal en même temps qu'une instruction alternative de navigation pour un itinéraire alternatif sur un écran du dispositif de navigation,
**caractérisé en ce que** :
le dispositif de navigation peut être mis en oeuvre pour calculer l'itinéraire alternatif en conservant une trace des itinéraires qui ont été suivis par un utilisateur du dispositif de navigation dans le passé, et en utilisant un itinéraire qui a été suivi par l'utilisateur dans le passé en tant qu'itinéraire alternatif.

2. Dispositif de navigation selon la revendication 1, dans lequel le dispositif peut être mis en oeuvre pour afficher l'instruction de navigation pour l'itinéraire principal et l'instruction alternative de navigation pour l'itinéraire alternatif sans intervention de l'utilisateur.

3. Dispositif de navigation selon n'importe quelle revendication précédente, dans lequel le dispositif peut être mis en oeuvre pour afficher simultanément une différence de distance et de temps de parcours entre l'itinéraire principal et l'itinéraire alternatif en même temps que l'instruction de navigation pour l'itinéraire principal et l'instruction alternative de navigation pour l'itinéraire alternatif.

4. Dispositif de navigation selon n'importe quelle revendication précédente, dans lequel l'itinéraire principal est un itinéraire préféré allant d'une origine jusqu'à la destination, ledit itinéraire principal incluant au moins quelques points qui sont des jonctions importantes auxquelles l'itinéraire alternatif jusqu'à la destination peut commencer, et, au niveau de ces jonctions, le dispositif peut être mis en oeuvre pour afficher simultanément une différence de distance et de temps de parcours entre l'itinéraire principal et l'itinéraire alternatif et une propriété caractéristique de l'itinéraire alternatif en même temps que l'instruction de navigation pour l'itinéraire principal et l'instruction alternative de navigation pour l'itinéraire alternatif.

5. Dispositif de navigation selon n'importe quelle revendication précédente, dans lequel le dispositif peut être mis en oeuvre de sorte que si un conducteur suit l'instruction alternative de navigation, le dispositif considère l'itinéraire alternatif associé à l'instruction alternative de navigation comme étant le nouvel itinéraire principal.

6. Dispositif de navigation selon n'importe quelle revendication précédente, dans lequel le dispositif peut être mis en oeuvre de sorte que sans qu'un utilisateur touche l'écran, l'utilisateur informe le dispositif qu'il souhaite suivre l'itinéraire alternatif, simplement en prenant ce chemin.

7. Dispositif de navigation selon n'importe quelle revendication précédente, dans lequel le dispositif reçoit des informations de trafic.

8. Dispositif de navigation selon n'importe quelle revendication précédente, dans lequel le dispositif est un dispositif portatif, ou un dispositif intégré au véhicule, ou un dispositif conçu pour une utilisation autre que pour un véhicule, ou un dispositif conçu pour des véhicules autres que des voitures.

9. Procédé consistant à fournir des instructions de navigation pour un dispositif de navigation, le procédé comprenant les étapes consistant à :
calculer des itinéraires jusqu'à une destination, lesdits itinéraires incluant un itinéraire principal et un itinéraire alternatif ; et
prévoir l'affichage simultané sur un écran du dispositif de navigation d'une instruction de navigation pour l'itinéraire principal en même temps qu'une instruction alternative de navigation pour l'itinéraire alternatif,
**caractérisé en ce que** :
l'itinéraire alternatif est calculé en conservant une trace d'itinéraires qui ont été suivis par un utilisateur du dispositif de navigation dans le passé et en utilisant un itinéraire qui a été suivi par l'utilisateur dans le passé en tant qu'itinéraire alternatif.

10. Produit formant programme informatique comprenant des instructions lisibles par ordinateur, qui lorsqu'elles sont exécutées sur un dispositif de navigation, amènent le dispositif de navigation à effectuer le procédé selon la revendication 9.
